# EUROPEAN PATENT APPLICATION

(11) **EP 4 575 819 A1**
(43) Date of publication of application: **25.06.2025**
(21) Application number: 23867186.1
(22) Date of filing: 17.08.2023
(51) Int. Cl.: G06F 16/215

(54) **METHOD AND DEVICE FOR LOCATING ROOT CAUSE AND STORAGE MEDIUM**

(30) Priority: 23.09.2022 CN 202211167522; 22.11.2022 CN 202211468801
(71) Applicant: Huawei Cloud Computing Technologies Co., Ltd., Guiyang, Guizhou 550025 (CN)
(72) Inventor: HAO, Shiyuan, Guiyang, Guizhou 550025 (CN); WEI, Ziheng, Guiyang, Guizhou 550025 (CN)
(74) Representative: Isarpatent
(86) International application number: PCT/CN2023/113468
(87) International publication number: WO 2024/060893

(57) **Abstract**

A root cause locating method and apparatus, and a storage medium are provided, and belong to the computer field. The method includes: A first device obtains a first conversion relationship between a plurality of data storage files and a first data storage file, where the first data storage file includes first dirty data, and the plurality of data storage files include the first data storage file. The first device determines, based on the first conversion relationship and the first data storage file, a root cause of generating the first dirty data. The method can improve efficiency of locating the root cause of generating the dirty data.

## Description

This application claims priorities to Chinese Patent Application No. 202211167522.1, filed on September 23, 2022 and entitled "DATA TABLE PROCESSING METHOD AND APPARATUS, AND STORAGE MEDIUM", and to Chinese Patent Application No. 202211468801.1, filed on November 22, 2022 and entitled "ROOT CAUSE LOCATING METHOD AND APPARATUS, AND STORAGE MEDIUM", both of which are incorporated herein by reference in their entireties.

### TECHNICAL FIELD

This application relates to the computer field, and in particular, to a root cause locating method and apparatus, and a storage medium.

### BACKGROUND

A database system usually includes a plurality of data storage files, and each data storage file is for storing data. One data storage file in the database system may be obtained by converting another data storage file in the database system. For example, a first data storage file is obtained by converting a second data storage file, the second data storage file is obtained by converting a third data storage file, and the first data storage file, the second data storage file, and the third data storage file are files in the database system.

The first data storage file includes first dirty data, and the second data storage file does not include dirty data. The first dirty data is generated by a conversion operation for converting the second data storage file into the first data storage file, and the conversion operation is a root cause of generating the first dirty data. Alternatively, the first data storage file includes the first dirty data, and the second data storage file includes second dirty data. The second dirty data is not generated by a conversion operation for converting the third data storage file into the second data storage file, but the first dirty data is caused by the second dirty data, and the second dirty data is a root cause of generating the first dirty data.

In a conventional technology, if it is found that a data storage file includes dirty data, a root cause of generating the dirty data is manually located, to repair the root cause. However, manual root cause locating results in low efficiency of locating the root cause.

### SUMMARY

This application provides a root cause locating method and apparatus, and a storage medium, to improve efficiency of locating a root cause of generating dirty data. The technical solutions are as follows.

According to a first aspect, this application provides a root cause locating method. In the method, a first device obtains a first conversion relationship between a plurality of data storage files and a first data storage file, where the first data storage file includes first dirty data, the plurality of data storage files include the first data storage file, and the first device is a database system in a cloud computing service or a management device communicating with the database system. The first device determines, based on the first conversion relationship and the first data storage file, a root cause of generating the first dirty data.

Because the first device obtains the first conversion relationship between the plurality of data storage files, the first device determines, based on the first conversion relationship and the first data storage file, the root cause of generating the first dirty data. In this way, the first device can automatically locate the root cause of generating the first dirty data, to improve efficiency of locating the root cause.

In a possible implementation, the first device obtains a second conversion relationship between a plurality of data sets and a first data set, where the plurality of data sets are data sets in the plurality of data storage files, and the first data set is a set that is in the first data storage file and that includes the first dirty data. The first device obtains a second data set in a second data storage file based on the first conversion relationship, the second conversion relationship, the first data storage file, and the first data set, where the plurality of data storage files further include the second data storage file, the first data storage file is obtained by converting the second data storage file, and the first data set is obtained by converting the second data set. When the second data set does not include dirty data, the first device determines that the root cause of generating the first dirty data is a first conversion operation.

Because the first device obtains the second conversion relationship between the plurality of data sets, the first device obtains the second data set in the second data storage file based on the first conversion relationship, the second conversion relationship, the first data storage file, and the first data set. When the second data set does not include the dirty data, the first device determines that the root cause of generating the first dirty data is the first conversion operation. In this way, the root cause can be located at a data set granularity and a fine granularity, and precision of locating the root cause can be improved.

In another possible implementation, the first device obtains a second data storage file based on the first conversion relationship and the first data storage file, where the plurality of data storage files further include the second data storage file, and the first data storage file is obtained by converting the second data storage file. When the second data storage file does not include dirty data, the first device determines that the root cause of generating the first dirty data is a first conversion operation, where the first conversion operation is for converting the second data storage file into the first data storage file.

Because the first device obtains the second data storage file based on the first conversion relationship, and the first data storage file is obtained by converting the second data storage file, when the second data storage file does not include the dirty data, the first device may determine that the root cause of generating the first dirty data is the first conversion operation. In this way, the root cause of generating the first dirty data can be quickly located.

In another possible implementation, the first conversion relationship includes a file identifier of the first data storage file and a file identifier of the second data storage file. The first device obtains the file identifier of the second data storage file based on the first conversion relationship and the file identifier of the first data storage file. The first device obtains the second data storage file based on the file identifier of the second data storage file. In this way, the first device can quickly obtain the second data storage file based on the file identifier of the first data storage file and by querying the first conversion relationship, to improve the precision of locating the root cause of generating the first dirty data.

In another possible implementation, the first device obtains a first script, where the first script is for implementing the first conversion operation, and the first script includes the file identifier of the first data storage file and the file identifier of the second data storage file. The first device generates the first conversion relationship that includes the file identifier of the first data storage file and the file identifier of the second data storage file in the first script. Because the first conversion relationship is first generated, when the root cause of generating the dirty data is located, the root cause of generating the dirty data can be quickly located by using the first conversion relationship.

In another possible implementation, when the second data storage file includes dirty data, the first device converts second dirty data by using the first conversion operation, to obtain target data, where the second dirty data is the dirty data included in the second data storage file. When the target data is different from the first dirty data, the first device determines that the root cause of generating the first dirty data is the first conversion operation.

Because the first device converts the second dirty data by using the first conversion operation, to obtain the target data, when the target data is different from the first dirty data, the first device determines that the root cause of generating the first dirty data is the first conversion operation, to improve the precision of locating the root cause.

In another possible implementation, when the target data is the same as the first dirty data, the first device obtains a third data storage file based on the first conversion relationship and the second data storage file, where the plurality of data storage files further include the third data storage file, and the second data storage file is obtained by converting the third data storage file. When the third data storage file does not include dirty data, the first device determines that the root cause of generating the first dirty data is a second conversion operation or the second dirty data, where the second conversion operation is for converting the third data storage file into the second data storage file.

When the target data is the same as the first dirty data, it indicates that the first dirty data is caused by the second dirty data. The first device continues to obtain the third data storage file based on the first conversion relationship and the second data storage file, and finds, by using the third data storage file, a source that causes the second dirty data, to locate the root cause of generating the dirty data.

In another possible implementation, the first device converts the third data storage file by using the second conversion operation, to obtain a target file. When the target file includes the second dirty data, the first device determines that the root cause of generating the first dirty data is the second conversion operation. Alternatively, when the target file does not include the second dirty data, the first device determines that the root cause of generating the first dirty data is the second dirty data. In this way, the precision of locating the root cause is improved.

In another possible implementation, when a similarity condition is satisfied between an encoding rule of the first dirty data and an encoding rule of the second dirty data, the first device converts the second dirty data by using the first conversion operation, to obtain the target data. In this way, data that needs to be converted can be reduced, and a computing amount can be reduced.

In another possible implementation, a format of the first data storage file is a structured data storage file or a semi-structured data storage file.

According to a second aspect, this application provides a root cause locating apparatus, configured to perform the method in any one of the first aspect or the possible implementations of the first aspect. Specifically, the apparatus includes units configured to perform the method in any one of the first aspect or the possible implementations of the first aspect.

According to a third aspect, this application provides a root cause locating device, including at least one processor and a memory. The at least one processor is configured to: be coupled to the memory, and read and execute instructions in the memory, to implement the method in any one of the first aspect or the possible implementations of the first aspect.

According to a fourth aspect, this application provides a computer program product. The computer program product includes a computer program stored in a computer-readable storage medium, and the computer program is loaded by a processor to implement the method in any one of the first aspect or the possible implementations of the first aspect.

According to a fifth aspect, this application provides a computer-readable storage medium, configured to store a computer program. The computer program is loaded by a processor to perform the method in any one of the first aspect or the possible implementations of the first aspect.

According to a sixth aspect, this application provides a chip. The chip includes a memory and a processor. The memory is configured to store computer instructions, and the processor is configured to invoke the computer instructions from the memory and run the computer instructions, to perform the method in any one of the first aspect or the possible implementations of the first aspect.

### BRIEF DESCRIPTION OF DRAWINGS

FIG. 1 is a diagram of converting a data storage file according to an embodiment of this application;
FIG. 2 is another diagram of converting a data storage file according to an embodiment of this application;
FIG. 3 is a schematic flowchart of a root cause locating method according to an embodiment of this application;
FIG. 4 is a diagram of a first interface according to an embodiment of this application;
FIG. 5 is a schematic flowchart of another root cause locating method according to an embodiment of this application;
FIG. 6 is a diagram of another first interface according to an embodiment of this application;
FIG. 7 is a diagram of a structure of a root cause locating apparatus according to an embodiment of this application; and
FIG. 8 is a diagram of a structure of a device according to an embodiment of this application.

### DESCRIPTION OF EMBODIMENTS

The following further describes in detail implementations of this application with reference to the accompanying drawings.

This application is applied to a database system in a cloud computing service. The database system includes a plurality of data storage files, and each data storage file is for storing data. For any data storage file, the data storage file includes at least one data set, and each data set includes at least one piece of data.

A format of the data storage file in the database system includes one or more of the following: a structured data storage file, a semi-structured data storage file, or the like.

The structured data storage file stores data in a form of a list. Therefore, the structured data storage file is a data table, and each column in the data table is a data set. For example, refer to a structured data storage file shown in Table 1 below. The structured data storage file is for storing customer information. The structured data storage file is a data table, and includes two columns of data. Each column of data is a data set, that is, the structured data storage file includes two data sets.

**Table 1**

| Customer name | Customer fixed-line phone number |
|---|---|
| Enterprise 1 | 01012345678 |
| Enterprise 2 | 01023456789 |
| Enterprise 3 | 01087654321 |

The semi-structured data storage file may be an extensible markup language (extensible markup language, XML) file, a JS object notation (javascript object notation, JSON) file, or the like. The semi-structured data storage file includes at least one data block, each data block includes at least one piece of data, and each data block in the semi-structured data storage file is a data set. For example, in the following semi-structured data storage file, the data storage file is an XML file with a file name: customer information, and includes two data blocks. A name of a 1^{st} data block is a customer name, and a name of a 2^{nd} data block is a customer fixed-line phone number. That is, the semi-structured data storage file includes two data sets: a data set 1 and a data set 2.

Semi-structured data storage file:

```
<title>Customer information</title>
        <Customer name> (Data set 1)
             Enterprise 1;
             Enterprise 2;
             Enterprise 3;
        </Customer name>
        <Customer fixed-line phone number> (Data set 2)
             01012345678;
             01023456789;
             01087654321;
        </Customer fixed-line phone number>
    <a/>
```

In some embodiments, any data storage file in the database system may be obtained by converting at least one other data storage file in the database system. For example, it is assumed that the database system includes a first data storage file, a second data storage file, and a third data storage file. The first data storage file is obtained by converting the second data storage file by using a first conversion operation, and the second data storage file is obtained by converting the third data storage file by using a second conversion operation.

Because the first data storage file is obtained by converting the second data storage file by using the first conversion operation, the first data storage file may be referred to as a destination file, and the second data storage file may be referred to as a source file. Similarly, because the second data storage file is obtained by converting the third data storage file by using the second conversion operation, the second data storage file may be referred to as a destination file, and the third data storage file may be referred to as a source file. Therefore, the destination file is obtained by converting the source file.

In some embodiments, the database system includes a script, and the script includes a source file identifier, a destination file identifier, and implementation code for implementing a conversion operation. The script is for implementing the conversion operation, and a source file corresponding to the source file identifier is converted into a destination file corresponding to the destination file identifier by using the conversion operation.

For example, the database system includes a first script and a second script. A source file identifier included in the first script is a file identifier of the second data storage file, and a destination file identifier included in the first script is a file identifier of the first data storage file. The first script further includes implementation code for implementing the first conversion operation, and the first script is for implementing the first conversion operation. A source file identifier included in the second script is a file identifier of the third data storage file, and a destination file identifier included in the second script is the file identifier of the second data storage file. The second script further includes implementation code for implementing the second conversion operation, and the second script is for implementing the second conversion operation.

For any script in the database system, the script includes at least one source file identifier, and the at least one source file identifier corresponds to at least one source file. The script indicates to convert the at least one source file into a destination file, and indicates to set a file identifier of the destination file to a destination file identifier in the script.

The database system includes at least one script, and the at least one script is for converting a file. In an implementation, for any script, at least one data storage file corresponding to at least one source file identifier is obtained from the database storage system based on the at least one source file identifier included in the script, where the at least one source file identifier is in one-to-one correspondence with the at least one data storage file. A conversion operation is obtained by running implementation code that is for implementing the conversion operation and that is included in the script. The at least one data storage file is converted into another data storage file by using the conversion operation, and a file identifier of the another data storage file is set to a destination file identifier included in the script.

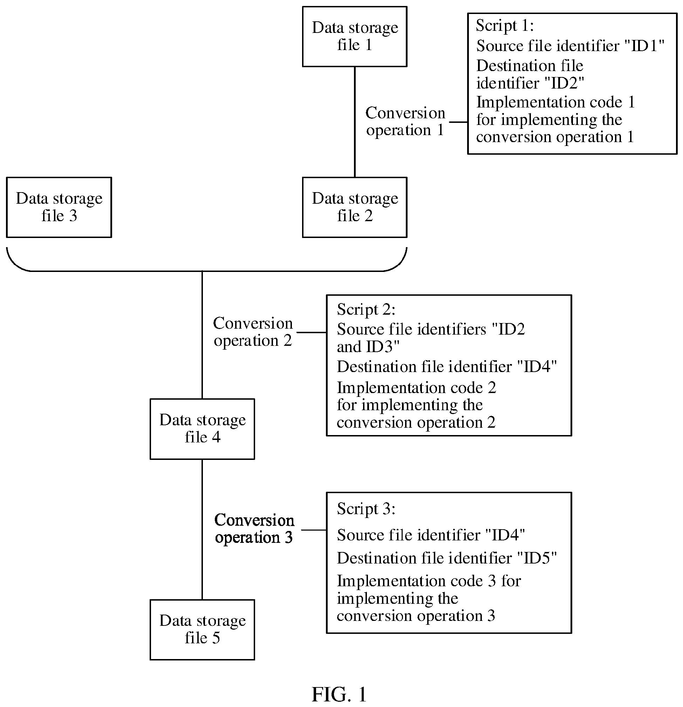

For example, refer to FIG. 1. The database system includes a script 1, a script 2, and a script 3. The script 1 includes a source file identifier "ID1", a destination file identifier "ID2", and implementation code 1 for implementing a conversion operation 1. The script 2 includes source file identifiers "ID2 and ID3", a destination file identifier "ID4", and implementation code 2 for implementing a conversion operation 2. The script 3 includes a source file identifier "ID4", a destination file identifier "ID5", and implementation code 3 for implementing a conversion operation 3.

The database system includes a data storage file 1 and a data storage file 3. A file identifier of the data storage file 1 is "ID1", and a file identifier of the data storage file 3 is "ID3". The database system obtains the script 1, and obtains, based on the source file identifier "ID1" included in the script 1, the data storage file 1 corresponding to the source file identifier "ID1". The conversion operation 1 is obtained by running the implementation code 1 that is for implementing the conversion operation 1 and that is included in the script 1. The data storage file 1 is converted into a data storage file 2 by using the conversion operation 1, and a file identifier of the data storage file 2 is set to the destination file identifier "ID2" included in the script 1.

The database system obtains the script 2, obtains, based on the source file identifier "ID2" included in the script 2, the data storage file 2 corresponding to the source file identifier "ID2", and obtains, based on the source file identifier "ID3" included in the script 2, the data storage file 3 corresponding to the source file identifier "ID3". The conversion operation 2 is obtained by running the implementation code 2 that is for implementing the conversion operation 2 and that is included in the script 2. The data storage file 2 and the data storage file 3 are converted into a data storage file 4 by using the conversion operation 2, and a file identifier of the data storage file 4 is set to the destination file identifier "ID4" included in the script 2.

The database system obtains the script 3, and obtains, based on the source file identifier "ID4" included in the script 3, the data storage file 4 corresponding to the source file identifier "ID4". The conversion operation 3 is obtained by running the implementation code 3 that is for implementing the conversion operation 3 and that is included in the script 3. The data storage file 4 is converted into a data storage file 5 by using the conversion operation 3, and a file identifier of the data storage file 5 is set to the destination file identifier "ID5" included in the script 3.

Any data storage file in a database system includes at least one data set. For any data set, the data set in the data storage file is obtained by converting a data set in at least one other data storage file in the database system. For example, it is assumed that the database system includes a first data storage file, a second data storage file, a third data storage file, and a fourth data storage file. A first data set in the first data storage file is obtained by converting a second data set in the second data storage file by using a first conversion operation, and the second data set in the second data storage file is obtained by converting a third data set in the third data storage file and a fourth data set in the fourth data storage file by using a second conversion operation.

Because the first data set in the first data storage file is obtained by converting the second data set in the second data storage file by using the first conversion operation, the first data storage file may be referred to as a destination file, the first data set may be referred to as a destination set, the second data storage file may be referred to as a source file, and the second data set may be referred to as a source set. Similarly, because the second data set in the second data storage file is obtained by converting the third data set in the third data storage file and the fourth data set in the fourth data storage file by using the second conversion operation, the second data storage file may be referred to as a destination file, the second data set may be referred to as a destination set, the third data storage file and the fourth data storage file may be referred to as source files, and the third data set and the fourth data set may be referred to as source sets. Therefore, the destination set in the destination file is obtained by converting the source set in the source file.

In some embodiments, the database system includes a script. The script includes a correspondence between a source file identifier, a source set identifier, a destination file identifier, and a destination set identifier, and implementation code for implementing a conversion operation. The script is for implementing the conversion operation. For a source file corresponding to the source file identifier and a source set corresponding to the source set identifier in the source file, the source set in the source file is converted into a destination set in a destination file by using the conversion operation, a file identifier of the destination file is set to the destination file identifier in the script, and a set identifier of the destination set is set to the destination set identifier in the script.

For example, the database system includes a first script and a second script. The first script includes a correspondence between a source file identifier, a source set identifier, a destination file identifier, and a destination set identifier shown in Table 2 below, and implementation code for implementing a first conversion operation. The first script is for implementing the first conversion operation. The source file identifier in the first script is a file identifier of a second data storage file, the source set identifier in the first script is a set identifier of a second data set, the destination file identifier in the first script is a file identifier of a first data storage file, and the destination set identifier in the first script is a set identifier of a first data set.

**Table 2**

| Source file identifier | Source set identifier | Destination file identifier | Destination set identifier |
|---|---|---|---|
| File identifier of the second data storage file | Set identifier of the second data set | File identifier of the first data storage file | Set identifier of the first data set |

The second script includes a correspondence between a source file identifier, a source set identifier, a destination file identifier, and a destination set identifier shown in Table 3, and implementation code for implementing a second conversion operation. The second script is for implementing the second conversion operation. The source file identifier in the second script is a file identifier of a third data storage file and a file identifier of a fourth data storage file, the source set identifier in the second script is a set identifier of a third data set and a set identifier of a fourth data set, the destination file identifier in the second script is a file identifier of a second data storage file, and the destination set identifier in the second script is a set identifier of a second data set.

**Table 3**

| Source file identifier | Source set identifier | Destination file identifier | Destination set identifier |
|---|---|---|---|
| File identifier of the third data storage file | Set identifier of the third data set | File identifier of the second data storage file | Set identifier of the second data set |
| File identifier of the fourth data storage file | Set identifier of the fourth data set | | |

For any script in the database system, and for a destination file identifier and any destination set identifier in the script, the destination file identifier may correspond to at least one source file identifier, and the destination set identifier may correspond to at least one source set identifier. The at least one source file identifier corresponds to at least one source file, and the at least one source file includes at least one source set corresponding to the at least one source set identifier. The script indicates to convert the at least one source set into a destination set in a destination file. A file identifier of the destination file is the destination file identifier in the script, and a set identifier of the destination set is the destination set identifier in the script. As shown in Table 3, in the second script, the source file identifier corresponding to the file identifier of the second data storage file is the file identifier of the third data storage file and the file identifier of the fourth data storage file, and the source set identifier corresponding to the set identifier of the second data set is the set identifier of the third data set and the set identifier of the fourth data set. The second script indicates to convert the third data set in the third data storage file and the fourth data set in the fourth data storage file into the second data set in the second data storage file.

The database system includes at least one script, and the at least one script is for converting a data set in a file. In an implementation, for any script, from a correspondence between a source file identifier, a source set identifier, a destination file identifier, and a destination set identifier in the script, at least one source file identifier and at least one source set identifier are obtained, and a destination file identifier corresponding to the at least one source file identifier and a destination set identifier corresponding to the at least one source set identifier are obtained. At least one data storage file is obtained from the database storage system based on the at least one source file identifier, where the at least one source file identifier is in one-to-one correspondence with the at least one data storage file. At least one data set is obtained from the at least one data storage file based on the at least one source set identifier. A conversion operation is obtained by running implementation code that is for implementing the conversion operation and that is included in the script. The at least one data set is converted into a data set in another data storage file by using the conversion operation, a file identifier of the another data storage file is set to the destination file identifier included in the script, and a set identifier of the data set in the another data storage file is set to the destination set identifier included in the script.

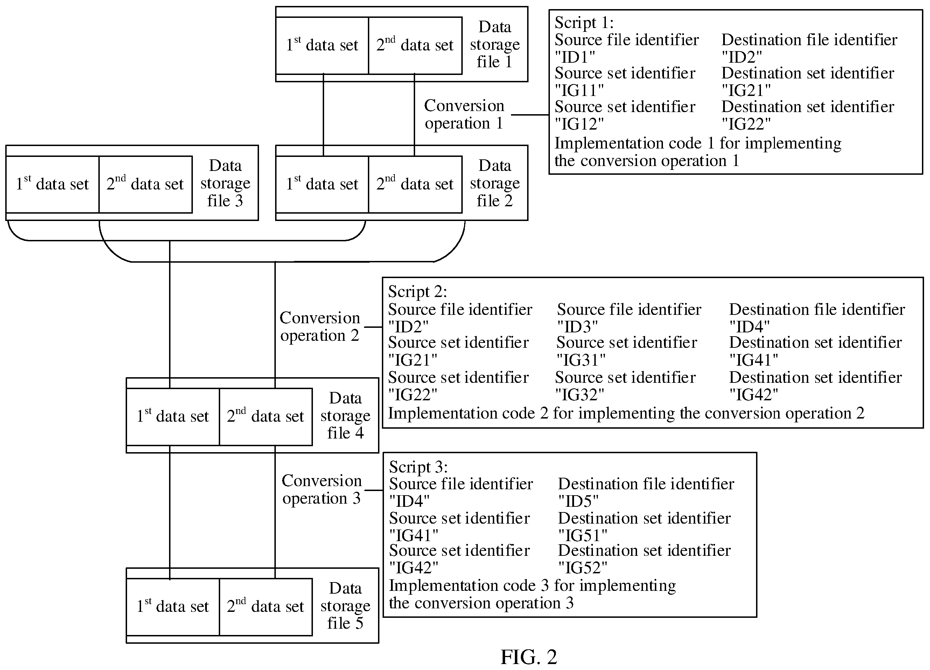

For example, refer to FIG. 2. The database system includes a script 1, a script 2, and a script 3. The script 1 includes a correspondence between a source file identifier, a source set identifier, a destination file identifier, and a destination set identifier shown in Table 4, and implementation code 1 for implementing a conversion operation 1.

**Table 4**

| Source file identifier | Source set identifier | Destination file identifier | Destination set identifier |
|---|---|---|---|
| ID1 | IG11 | ID2 | IG21 |
| ID1 | IG12 | ID2 | IG22 |

The script 2 includes a correspondence between a source file identifier, a source set identifier, a destination file identifier, and a destination set identifier shown in Table 5, and implementation code 2 for implementing a conversion operation 2.

**Table 5**

| Source file identifier | Source set identifier | Destination file identifier | Destination set identifier |
|---|---|---|---|
| ID2 | IG21 | ID4 | IG41 |
| ID3 | IG31 | | |
| ID2 | IG22 | ID4 | IG42 |
| ID3 | IG32 | | |

The script 3 includes a correspondence between a source file identifier, a source set identifier, a destination file identifier, and a destination set identifier shown in Table 6, and implementation code 3 for implementing a conversion operation 3.

**Table 6**

| Source file identifier | Source set identifier | Destination file identifier | Destination set identifier |
|---|---|---|---|
| ID4 | IG41 | ID5 | IG51 |
| ID4 | IG42 | ID5 | IG52 |

The database system includes a data storage file 1 and a data storage file 3. A file identifier of the data storage file 1 is "ID1", a set identifier of a 1^{st} data set in the data storage file 1 is "IG11", and a set identifier of a 2^{nd} data set in the data storage file 1 is "IG12". A file identifier of the data storage file 3 is "ID3", a set identifier of a 1^{st} data set in the data storage file 3 is "IG31", and a set identifier of a 2^{nd} data set in the data storage file 3 is "IG32".

The database system obtains the script 1, obtains the 1^{st} data set in the data storage file 1 based on the source file identifier "ID1" and the source set identifier "IG11" that are included in the script 1, and obtains the 2^{nd} data set in the data storage file 1 based on the source file identifier "ID1" and the source set identifier "IG12" that are included in the script 1. The conversion operation 1 is obtained by running the implementation code 1 that is for implementing the conversion operation 1 and that is included in the script 1, the 1^{st} data set in the data storage file 1 is converted into a 1^{st} data set in a data storage file 2 by using the conversion operation 1, and the 2^{nd} data set in the data storage file 1 is converted into a 2^{nd} data set in the data storage file 2 by using the conversion operation 1. A file identifier of the data storage file 2 is set to the destination file identifier "ID2" included in the script 1, a set identifier of the 1^{st} data set in the data storage file 2 is set to the destination set identifier IG21 in the script 1, and a set identifier of the 2^{nd} data set in the data storage file 2 is set to the destination set identifier IG22 in the script 1.

The database system obtains the script 2, and obtains the 1^{st} data set in the data storage file 2 and the 1^{st} data set in the data storage file 3 based on the source file identifier "ID2", the source set identifier "IG21", the source file identifier "ID3", and the source set identifier "IG31" that are included in the script 2. The 2^{nd} data set in the data storage file 2 and the 2^{nd} data set in the data storage file 3 are obtained based on the source file identifier "ID2", the source set identifier "IG22", the source file identifier "ID3", and the source set identifier "IG32" that are included in the script 2. The conversion operation 2 is obtained by running the implementation code 2 that is for implementing the conversion operation 2 and that is included in the script 2, the 1^{st} data set in the data storage file 2 and the 1^{st} data set in the data storage file 3 are converted into a 1^{st} data set in a data storage file 4 by using the conversion operation 2, and the 2^{nd} data set in the data storage file 2 and the 2^{nd} data set in the data storage file 3 are converted into a 2^{nd} data set in the data storage file 4 by using the conversion operation 2. A file identifier of the data storage file 4 is set to the destination file identifier "ID4" included in the script 2, a set identifier of the 1^{st} data set in the data storage file 4 is set to the destination set identifier IG41 in the script 2, and a set identifier of the 2^{nd} data set in the data storage file 4 is set to the destination set identifier IG42 in the script 1.

The database system obtains the script 3, obtains the 1^{st} data set in the data storage file 4 based on the source file identifier "ID4" and the source set identifier "IG41" that are included in the script 3, and obtains the 2^{nd} data set in the data storage file 4 based on the source file identifier "ID4" and the source set identifier "IG42" that are included in the script 3. The conversion operation 3 is obtained by running the implementation code 3 that is for implementing the conversion operation 3 and that is included in the script 3, the 1^{st} data set in the data storage file 4 is converted into a 1^{st} data set in a data storage file 5 by using the conversion operation 3, and the 2^{nd} data set in the data storage file 4 is converted into a 2^{nd} data set in the data storage file 5 by using the conversion operation 3. A file identifier of the data storage file 5 is set to the destination file identifier "ID5" included in the script 3, a set identifier of the 1^{st} data set in the data storage file 5 is set to the destination set identifier IG51 in the script 3, and a set identifier of the 2^{nd} data set in the data storage file 5 is set to the destination set identifier IG52 in the script 3.

In some embodiments, a file identifier of a data storage file is a file name, a file number, or the like of the data storage file. A set of a data set is a set name, a number, or the like of the data set. For example, the data set is a column of data in the data storage file, and a set identifier of the data set is a column name of the column of data.

In some embodiments, a conversion operation may be case conversion, sorting, data splicing, and/or the like.

The database system converts a source file into a destination file by using a conversion operation. For ease of description, the conversion operation is referred to as a conversion operation 1, and the source file is referred to as a source file 1. The conversion operation 1 may be an abnormal operation. As a result, a destination file 1 obtained through conversion includes dirty data 1, or the source file 1 has dirty data 1, and a destination file 1 obtained through conversion includes dirty data 2 due to the dirty data 1 included in the source file 1. The destination file 1 is used as a source file 2, and the source file 2 continues to be converted into a destination file 2. The destination file 2 obtained through conversion may include dirty data 3. Therefore, the conversion operation or the dirty data 1 is a root cause of generating the dirty data 2 and the dirty data 3. When it is found that a data storage file has dirty data, a root cause of the dirty data needs to be located to repair the root cause. The dirty data refers to data that is not in a specified range, data in an invalid format, data that is incorrectly encoded, and/or the like.

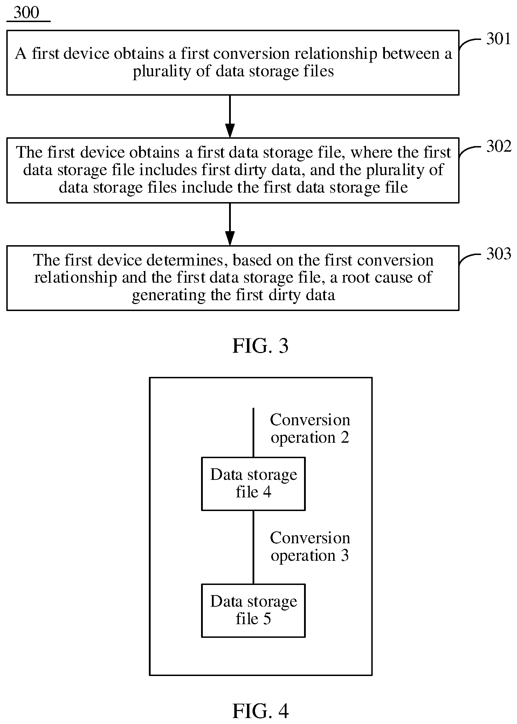

Refer to FIG. 3. An embodiment of this application provides a root cause locating method 300. The method 300 may be performed by a first device. The first device is a database system in a cloud computing service, a management device communicating with the database system, or the like. The method 300 includes the following step 301 to step 303.

Step 301: The first device obtains a first conversion relationship between a plurality of data storage files.

The plurality of data storage files are data storage files in the database system.

In some embodiments, the first conversion relationship is a correspondence between a source file identifier and a destination file identifier. The first conversion relationship may be obtained by performing the following operations in 3011 and 3012.

3011: Obtain a script, where the script is any script in the database system.

The script includes the source file identifier, the destination file identifier, and implementation code for implementing a conversion operation. The script is for implementing the conversion operation, and the conversion operation is for converting a data storage file corresponding to the source file identifier into a data storage file corresponding to the destination file identifier.

3012: Correspondingly store the source file identifier and the destination file identifier in the script in the first conversion relationship.

In some embodiments, the first conversion relationship is a correspondence between a source file identifier, a destination file identifier, and a conversion operation. The conversion operation is determined based on the implementation code that is for implementing the conversion operation and that is included in the script, and the conversion operation, and the source file identifier and the destination file identifier in the script are correspondingly stored in the first conversion relationship.

In step 301, another script in the database system continues to be obtained, and a source file identifier and a destination file identifier in the another script are correspondingly stored in the first conversion relationship.

For example, refer to FIG. 1. It is assumed that the database system includes the script 1, the script 2, and the script 3. The script 1 includes the source file identifier "ID1" and the destination file identifier "ID2". The script 2 includes the source file identifiers "ID2" and "ID3", and the destination file identifier "ID4". The script 3 includes the source file identifier "ID4" and the destination file identifier "ID5".

The script 1 is obtained, and the conversion operation 1 is determined based on the implementation code 1 that is for implementing the conversion operation 1 and that is included in the script 1. The conversion operation 1, and the source file identifier "ID1" and the destination file identifier "ID2" in the script 1 are correspondingly stored in the first conversion relationship shown in Table 7 (with reference to a record with a sequence number 1 in Table 7). The script 2 is obtained, and the conversion operation 2 is determined based on the implementation code 2 that is for implementing the conversion operation 2 and that is included in the script 2. The conversion operation 2, and the source file identifiers "ID2 and ID3" and the destination file identifier "ID4" in the script 2 are correspondingly stored in the first conversion relationship shown in Table 7 (with reference to a record with a sequence number 2 in Table 7). The script 3 is obtained, and the conversion operation 3 is determined based on the implementation code 3 that is for implementing the conversion operation 3 and that is included in the script 3. The conversion operation 3, and the source file identifier "ID4" and the destination file identifier "ID5" in the script 3 are correspondingly stored in the first conversion relationship shown in Table 7 (with reference to a record with a sequence number 3 in Table 7).

**Table 7**

| Sequence number | Source file identifier | Destination file identifier | Conversion operation |
|---|---|---|---|
| 1 | ID1 | ID2 | Conversion operation 1 |
| 2 | ID2 | ID4 | Conversion operation 2 |
| | ID3 | | |
| 3 | ID4 | ID5 | Conversion operation 3 |

In some embodiments, the first conversion relationship includes a plurality of scripts. In step 301, a plurality of scripts in the database system are obtained.

Step 302: The first device obtains a first data storage file, where the first data storage file includes first dirty data, and the plurality of data storage files include the first data storage file.

In some embodiments, step 302 may be: Perform scanning from a 1^{st} data storage file included in the database system, obtain the scanned data storage file, and identify, by using an algorithm for identifying dirty data, whether the data storage file includes the dirty data. If the data storage file includes the dirty data, the data storage file is used as the first data storage file, the dirty data is determined as the first dirty data, and then a root cause of generating the first dirty data in the first data storage file is located by performing the following operation in step 303. If the data storage file does not include the dirty data, a next data storage file included in the database system is scanned, the scanned data storage file is obtained, and whether the data storage file includes the dirty data is identified by using the algorithm for identifying the dirty data.

In some embodiments, step 302 may be: If a skilled person finds that a data storage file in the database system includes dirty data, obtain the data storage file input by the skilled person as the first data storage file, identify the first dirty data in the first data storage file by using an algorithm for identifying dirty data, and then locate, by performing the following operation in step 303, a root cause of generating the first dirty data in the first data storage file.

For example, refer to FIG. 1. Assuming that the skilled person finds that the data storage file 5 includes the dirty data, the data storage file 5 input by the skilled person is obtained, the first dirty data in the data storage file 5 is identified by using the algorithm for identifying the dirty data, and the root cause of generating the first dirty data in the first data storage file is located by performing the following step 303.

Step 303: The first device determines, based on the first conversion relationship and the first data storage file, the root cause of generating the first dirty data.

In step 303, the root cause of generating the first dirty data is determined by performing the following operations in steps 3031 to 3038.

3031: Obtain a second data storage file based on the first conversion relationship and the first data storage file, where the plurality of data storage files further include the second data storage file, and the first data storage file is obtained by converting the second data storage file.

In some embodiments, the first conversion relationship is the correspondence between the source file identifier and the destination file identifier. 3031 may be: Use a file identifier of the first data storage file as the destination file identifier, obtain, from the first conversion relationship based on the destination file identifier, the source file identifier corresponding to the destination file identifier, and obtain, based on the source file identifier, a data storage file corresponding to the source file identifier as the second data storage file.

The first conversion relationship may be the correspondence between the source file identifier, the destination file identifier, and the conversion operation. Optionally, the source file identifier and the conversion operation that correspond to the destination file identifier are obtained from the first conversion relationship based on the destination file identifier. The conversion operation is a first conversion operation for converting the second data storage file into the first data storage file.

For example, refer to FIG. 1. The file identifier "ID5" of the data storage file 5 is used as the destination file identifier, the source file identifier "ID4" and the "conversion operation 3" that correspond to the destination file identifier "ID5" are obtained from the first conversion relationship shown in Table 7 based on the destination file identifier "ID5", and the data storage file 4 corresponding to the source file identifier "ID4" is obtained based on the source file identifier "ID4".

In some embodiments, the first conversion relationship includes the plurality of scripts in the database system. 3031 may be: Obtain a first script from the plurality of scripts based on a file identifier of the first data storage file, where a destination file identifier included in the first script is the file identifier of the first data storage file, use a source file identifier included in the first script as a file identifier of the second data storage file, and obtain the second data storage file based on the file identifier of the second data storage file.

Optionally, a conversion operation is determined based on implementation code that is for the conversion operation and that is included in the first script, where the conversion operation is a first conversion operation for converting the second data storage file into the first data storage file.

For example, refer to FIG. 1. The script 3 is obtained from the script 1, the script 2, and the script 3 based on the file identifier "ID5" of the data storage file 5, and the destination file identifier included in the script 3 is the file identifier "ID5" of the data storage file 5. The data storage file 4 is obtained based on the source file identifier "ID4" included in the script 3. The conversion operation 3 is determined based on the implementation code 3 that is for implementing the conversion operation 3 and that is included in the script 3, where the first conversion operation is the conversion operation 3.

3032: Identify whether the second data storage file includes the dirty data, and if the second data storage file does not include the dirty data, perform 3033, or if the second data storage file includes the dirty data, perform 3034.

In 3032, whether the second data storage file includes the dirty data is identified by using the algorithm for identifying the dirty data. For example, whether the data storage file 4 includes the dirty data is identified by using the algorithm for identifying the dirty data. Assuming that the data storage file 4 includes the dirty data, an operation in 3034 is performed.

3033: Determine that the root cause of generating the first dirty data is the first conversion operation, where the first conversion operation is for converting the second data storage file into the first data storage file. The procedure ends.

The second data storage file does not have the dirty data, but the first data storage file has the first dirty data. The first dirty data may be generated when the second data storage file is converted into the first data storage file by using the first conversion operation, that is, the first dirty data is generated by the first conversion operation. Therefore, the first conversion operation may be determined as the root cause of generating the first dirty data.

In some embodiments, to improve precision of locating the root cause, the second data storage file is converted by using the first conversion operation, to obtain a first target file. If the first target file includes the first dirty data, it is verified that the first dirty data is generated by the first conversion operation, so that it may be determined that the root cause of generating the first dirty data is the first conversion operation.

If the first target file does not include the first dirty data, it is determined that the first dirty data in the first data storage file is not generated by the first conversion operation. The first dirty data in the first data storage file may be generated due to another reason. For example, the first dirty data in the first data storage file may be generated by a misoperation of the skilled person, or the first dirty data in the first data storage file may be generated by a hacker attack.

3034: Convert second dirty data in the second data storage file by using the first conversion operation, to obtain target data.

In some embodiments, when a similarity condition is satisfied between an encoding rule of the first dirty data and an encoding rule of the second dirty data, the second dirty data in the second data storage file is converted by using the first conversion operation, to obtain the target data.

Optionally, in an implementation, a similarity between the encoding rule of the first dirty data and the encoding rule of the second dirty data is calculated. When the similarity exceeds a similarity threshold, it is determined that the similarity condition is satisfied between the encoding rule of the first dirty data and the encoding rule of the second dirty data, and the second dirty data in the second data storage file is converted by using the first conversion operation, to obtain the target data.

For example, for the data storage file 4, the first conversion operation is the conversion operation 3, and the dirty data in the data storage file 4 is converted by using the conversion operation 3, to obtain the target data.

3035: Determine whether the target data is the same as the first dirty data, and if the target data is different from the first dirty data, perform 3036, or if the target data is the same as the first dirty data, perform 3037.

For example, for the dirty data in the data storage file 5, whether the target data obtained through the conversion operation 3 is the same as the dirty data in the data storage file 5 is determined. Assuming that a result is that it is determined that the target data is the same as the dirty data, 3037 is performed.

3036: Determine that the root cause of generating the first dirty data in the first data storage file is the first conversion operation. The procedure ends.

If the target data is different from the first dirty data, it indicates that the first dirty data in the first data storage file is not generated due to the second dirty data in the second data storage file, and the first dirty data in the first data storage file may be generated by the first conversion operation. Therefore, it may be determined that the root cause of generating the first dirty data in the first data storage file is the first conversion operation.

3037: Obtain a third data storage file based on the first conversion relationship and the second data storage file, where the plurality of data storage files further include the third data storage file, and the second data storage file is obtained by converting the third data storage file.

In some embodiments, the first conversion relationship is the correspondence between the source file identifier and the destination file identifier. 3037 may be: Use the file identifier of the second data storage file as the destination file identifier, obtain, from the first conversion relationship based on the destination file identifier, the source file identifier corresponding to the destination file identifier, and obtain, based on the source file identifier, a data storage file corresponding to the source file identifier as the third data storage file.

The first conversion relationship may be the correspondence between the source file identifier, the destination file identifier, and the conversion operation. Optionally, the source file identifier and the conversion operation that correspond to the destination file identifier are obtained from the first conversion relationship based on the destination file identifier. The conversion operation is a second conversion operation for converting the third data storage file into the second data storage file.

For example, refer to FIG. 1. The file identifier "ID4" of the data storage file 4 is used as the destination file identifier, the source file identifiers "ID2 and ID3" and the "conversion operation 2" that correspond to the destination file identifier "ID4" are obtained from the first conversion relationship shown in Table 7 based on the destination file identifier "ID4", and the data storage file 2 corresponding to the source file identifier "ID2" and the data storage file 3 corresponding to the source file identifier "ID3" are obtained based on the source file identifiers "ID2 and ID3".

In some embodiments, the first conversion relationship includes the plurality of scripts in the database system. 3037 may be: Obtain a second script from the plurality of scripts based on a file identifier of the second data storage file, where a destination file identifier included in the second script is the file identifier of the second data storage file, use a source file identifier included in the second script as a file identifier of the third data storage file, and obtain the third data storage file based on the file identifier of the third data storage file.

Optionally, a conversion operation is determined based on implementation code that is for the conversion operation and that is included in the second script, where the conversion operation is a second conversion operation for converting the third data storage file into the second data storage file.

For example, refer to FIG. 1. The script 2 is obtained from the script 1, the script 2, and the script 3 based on the file identifier "ID4" of the data storage file 4, and the destination file identifier included in the script 2 is the file identifier "ID4" of the data storage file 4. The data storage file 2 and the data storage file 3 are obtained based on the source file identifiers "ID2 and ID3" included in the script 2. The conversion operation 2 is determined based on the implementation code 2 that is for implementing the conversion operation 2 and that is included in the script 2, where the second conversion operation is the conversion operation 2.

3038: Identify whether the third data storage file includes the dirty data, and if the third data storage file does not include the dirty data, determine that the root cause of generating the first dirty data in the first data storage file is the second conversion operation or the second dirty data in the second data storage file, where the second conversion operation is for converting the third data storage file into the second data storage file. The procedure ends.

In 3038, whether the third data storage file includes the dirty data is identified by using the algorithm for identifying the dirty data. If the third data storage file does not include the dirty data, the third data storage file is converted by using the second conversion operation, to obtain a second target file. When the second target file includes the second dirty data, it is determined that the root cause of generating the first dirty data is the second conversion operation, or when the second target file does not include the second dirty data, it is determined that the root cause of generating the first dirty data is the second dirty data.

When the second target file includes the second dirty data, it indicates that the second dirty data in the second data storage file is generated when the third data storage file is converted by using the second conversion operation, to obtain the second data storage file, that is, the second dirty data in the second data storage file is generated by the second conversion operation, and it is determined that the root cause of generating the first dirty data is the second conversion operation.

When the second target file does not include the second dirty data, it indicates that the second dirty data in the second data storage file is not generated when the third data storage file is converted by using the second conversion operation, to obtain the second data storage file, that is, the second dirty data in the second data storage file is not generated by the second conversion operation, and it is determined that the root cause of generating the first dirty data is the second dirty data in the second data storage file.

If the third data storage file includes the dirty data, the root cause of generating the first dirty data in the first data storage file continues to be located. For a specific locating process, refer to the foregoing operations in 3034 to 3038, and details are not described herein again.

For example, whether the data storage file 2 and the data storage file 3 include the dirty data is identified by using the algorithm for identifying the dirty data. Assuming that it is identified that neither the data storage file 2 nor the data storage file 3 includes the dirty data, the data storage file 2 and the data storage file 3 are converted by using the conversion operation 2, to obtain the second target file. If the second target file includes the second dirty data, it is determined that a root cause of generating the dirty data in the data storage file 5 is the conversion operation 2. The procedure ends.

In some embodiments, the located root cause of generating the first dirty data in the first data storage file may be displayed. Optionally, a topology view between the first dirty data in the first data storage file and the root cause may be displayed. Alternatively, a topology of a specified quantity of layers is selected from a topology view between the first dirty data in the first data storage file and the root cause, and the topology of the specified quantity of layers is displayed.

Optionally, a conversion operation of each time of conversion in the topology view is further displayed.

For example, a first interface shown in FIG. 4 is displayed, and the first interface includes a topology view between the first dirty data in the data storage file 5 and the conversion operation 2.

In some embodiments, if the skilled person finds that a displayed root cause is incorrect, the skilled person may modify the displayed root cause.

In some embodiments, the skilled person may repair the root cause. For example, if the root cause is a conversion operation, a script for implementing the conversion operation is repaired; or if the root cause is dirty data in a data storage file, the dirty data in the data storage file is repaired.

After the root cause is repaired, the data storage file in the database system is re-converted, so that the dirty data in the data storage file in the database system can be repaired.

For example, refer to FIG. 4. The root cause of generating the dirty data in the data storage file 5 is the conversion operation 2, and the skilled person repairs the script 2 for implementing the conversion operation 2. Then, the data storage file 2 and the data storage file 3 are converted by using a repaired script 2, to obtain the data storage file 4, and the data storage file 4 is converted by using the script 3, to obtain the data storage file 5, so that the dirty data in the data storage file 4 and the data storage file 5 in the database system can be repaired.

In this embodiment of this application, the first conversion relationship is obtained, where the first conversion relationship includes the correspondence between the source file identifier and the destination file identifier. When the first dirty data in the first data storage file is obtained, the second data storage file is obtained based on the file identifier of the first data storage file and the first conversion relationship, where the first data storage file is obtained by converting the second data storage file. When the second data storage file does not include the dirty data, it is determined that the root cause of generating the first dirty data is the first conversion operation, where the first conversion operation is for converting the second data storage file into the first data storage file. When the second data storage file includes dirty data, the second dirty data is converted by using the first conversion operation, to obtain second target data, where the second dirty data is the dirty data included in the second data storage file; and when the second target data is different from the first dirty data, it is determined that the root cause of generating the first dirty data is the first conversion operation. When the second target data is the same as the first dirty data, the third data storage file is obtained based on the first conversion relationship and the second data storage file, where the second data storage file is obtained by converting the third data storage file; and when the third data storage file does not include dirty data, it is determined that the root cause of generating the first dirty data is the second conversion operation or the second dirty data, where the second conversion operation is for converting the third data storage file into the second data storage file. In this way, the root cause of generating the first dirty data in the first data storage file can be automatically located by using the first conversion relationship, to improve efficiency of locating the root cause.

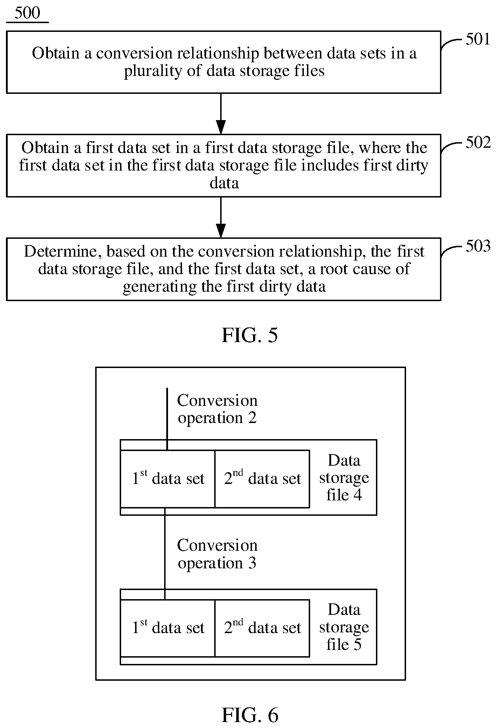

Refer to FIG. 5. An embodiment of this application provides a root cause locating method 500. The method 500 may be performed by a database system, a management device communicating with the database system, or the like. The method 500 includes the following step 501 to step 503.

Step 501: Obtain a conversion relationship between data sets in a plurality of data storage files.

The plurality of data storage files are data storage files in the database system.

In some embodiments, the conversion relationship is a correspondence between a source file identifier, a source set identifier, a destination file identifier, and a destination set identifier. The conversion relationship may be obtained by performing operations in 5011 and 5012.

5011: Obtain a script, where the script is any script in the database system.

The script includes a source file identifier, a source set identifier, a destination file identifier, a destination set identifier, and implementation code for implementing a conversion operation, and the script is for implementing the conversion operation. The conversion operation is for converting a source set corresponding to the source set identifier in a data storage file corresponding to the source file identifier into a destination set corresponding to the destination set identifier in a data storage file corresponding to the destination file identifier.

5012: Correspondingly store, in the conversion relationship, the source file identifier, the source set identifier, the destination file identifier, and the destination set identifier in the script.

In some embodiments, the conversion relationship is a correspondence between a source file identifier, a source set identifier, a destination file identifier, a destination set identifier, and a conversion operation. The conversion operation is determined based on implementation code that is for implementing the conversion operation and that is included in a script, and the conversion operation, and the source file identifier, the source set identifier, the destination file identifier, and the destination set identifier in the script are correspondingly stored in the conversion relationship.

In step 501, another script in the database system continues to be obtained, and a source file identifier, a source set identifier, a destination file identifier, and a destination set identifier in the another script are correspondingly stored in the conversion relationship.

For example, refer to FIG. 2. It is assumed that the database system includes the script 1, the script 2, and the script 3. The script 1 includes the source file identifier "ID1", the destination file identifier "ID2", the source set identifier "IG11", the destination set identifier "IG21", the source set identifier "IG12", and the destination set identifier "IG22". The script 2 includes the source file identifier "ID2", the source file identifier "ID3", and the destination file identifier "ID4"; the source set identifier "IG21", the source set identifier "IG31", and the destination set identifier "IG41"; and the source set identifier "IG22", the source set identifier "IG32", and the destination set identifier "IG42". The script 3 includes the source file identifier "ID4" and the destination file identifier "ID5"; the source set identifier "IG41" and the destination set identifier "IG51"; and the source set identifier "IG42" and the destination set identifier "IG52".

The script 1 is obtained, and the conversion operation 1 is determined based on the implementation code 1 that is for implementing the conversion operation 1 and that is included in the script 1. The conversion operation 1, and the source file identifier "ID1", the source set identifier "IG11", the destination file identifier "ID2", and the destination set identifier "IG21" in the script 1 are correspondingly stored in a conversion relationship shown in Table 8 (with reference to a record with a sequence number 1 in Table 8). The conversion operation 1, and the source file identifier "ID1", the source set identifier "IG12", the destination file identifier "ID2", and the destination set identifier "IG22" in the script 1 are correspondingly stored in the conversion relationship shown in Table 8 (with reference to a record with a sequence number 2 in Table 8).

The script 2 is obtained, and the conversion operation 2 is determined based on the implementation code 2 that is for implementing the conversion operation 2 and that is included in the script 2. The conversion operation 2, and the source file identifier "ID2", the source set identifier "IG21", the source file identifier "ID3", the source set identifier "IG31", the destination file identifier "ID4", and the destination set identifier "IG41" in the script 2 are correspondingly stored in the conversion relationship shown in Table 8 (with reference to a record with a sequence number 3 in Table 8). The conversion operation 2, and the source file identifier "ID2", the source set identifier "IG22", the source file identifier "ID3", the source set identifier "IG32", the destination file identifier "ID4", and the destination set identifier "IG42" in the script 2 are correspondingly stored in the conversion relationship shown in Table 8 (with reference to a record with a sequence number 4 in Table 8).

The script 3 is obtained, and the conversion operation 3 is determined based on the implementation code 3 that is for implementing the conversion operation 3 and that is included in the script 3. The conversion operation 3, and the source file identifier "ID4", the source set identifier "IG41", the destination file identifier "ID5", and the destination set identifier "IG51" n the script 3 are correspondingly stored in the conversion relationship shown in Table 8 (with reference to a record with a sequence number 5 in Table 8). The conversion operation 3, and the source file identifier "ID3", the source set identifier "IG42", the destination file identifier "ID5", and the destination set identifier "IG52" in the script 3 are correspondingly stored in the conversion relationship shown in Table 8 (with reference to a record with a sequence number 6 in Table 8).

**Table 8**

| Sequence number | Source file identifier | Source set identifier | Destination file identifier | Destination set identifier | Conversion operation |
|---|---|---|---|---|---|
| 1 | ID1 | IG11 | ID2 | IG21 | Conversion operation 1 |
| 2 | ID1 | IG12 | ID2 | IG22 | Conversion operation 1 |
| 3 | ID2 | IG21 | ID4 | IG41 | Conversion operation 2 |
| | ID3 | IG31 | | | |
| 4 | ID2 | IG22 | ID4 | IG42 | Conversion operation 2 |
| | ID3 | IG32 | | | |
| 5 | ID4 | IG41 | ID5 | IG51 | Conversion operation 3 |
| 6 | ID4 | IG42 | ID5 | IG52 | Conversion operation 3 |

In some embodiments, the conversion relationship includes a plurality of scripts. In step 501, a plurality of scripts in the database system are obtained.

Step 502: Obtain a first data set in a first data storage file, where the first data set in the first data storage file includes first dirty data, and the plurality of data storage files include the first data storage file.

In some embodiments, step 502 may be: Perform scanning from a 1^{st} data storage file included in the database system, obtain the scanned data storage file, and identify, by using an algorithm for identifying dirty data, whether a data set in the data storage file includes the dirty data. If a data set in the data storage file includes the dirty data, the data storage file is used as the first data storage file, the data set is used as the first data set, and the dirty data is used as the first dirty data. Then a root cause of generating the first dirty data in the first data set in the first data storage file is located by performing the following operation in step 503. If the data storage file does not include the dirty data, a next data storage file included in the database system is scanned, the scanned data storage file is obtained, and whether the data set in the data storage file includes the dirty data is identified by using the algorithm for identifying the dirty data.

In some embodiments, step 502 may be: If a skilled person finds that a data set in a data storage file in the database system includes dirty data, obtain the data set in the data storage file input by the skilled person as the first data set in the first data storage file, identify the first dirty data in the first data set in the first data storage file by using an algorithm for identifying dirty data, and then locate, by performing the following operation in step 503, a root cause of generating the first dirty data in the first data set in the first data storage file.

For example, refer to FIG. 2. Assuming that the skilled person finds that the 1^{st} data set in the data storage file 5 includes the dirty data, the 1^{st} data set in the data storage file 5 input by the skilled person is obtained, the first dirty data in the 1^{st} data set in the data storage file 5 is identified by using the algorithm for identifying the dirty data, and the root cause of generating the first dirty data in the 1^{st} data set in the first data storage file is located by performing the following step 503.

Step 503: Determine, based on the conversion relationship, the first data storage file, and the first data set, the root cause of generating the first dirty data.

In step 503, the root cause of generating the first dirty data is determined by performing the following operations in steps 5031 to 5038.

5031: Obtain a second data set in a second data storage file based on the conversion relationship, the first data storage file, and the first data set, where the plurality of data storage files further include the second data storage file, and the first data set in the first data storage file is obtained by converting the second data set in the second data storage file.

In some embodiments, a first conversion relationship is a correspondence between a source file identifier, a source set identifier, a destination file identifier, and a destination set identifier. 5031 may be: Use a file identifier of the first data storage file as the destination file identifier, use a set identifier of the first data set as the destination set identifier, obtain, from the conversion relationship based on the destination file identifier and the destination set identifier, the source file identifier and the source set identifier that correspond to the destination file identifier and the destination set identifier, and obtain, based on the source file identifier and the source set identifier, a data set corresponding to the source set identifier in a data storage file corresponding to the source file identifier as the second data set in the second data storage file.

The conversion relationship may be the correspondence between the source file identifier, the source set identifier, the destination file identifier, the destination set identifier, and the conversion operation. Optionally, a conversion operation corresponding to the destination file identifier is obtained from the conversion relationship based on the destination file identifier. The conversion operation is a first conversion operation for converting the second data storage file into the first data storage file.

For example, refer to FIG. 2. The file identifier "ID5" of the data storage file 5 is used as the destination file identifier, and the set identifier "IG51" of the 1^{st} data set in the data storage file 5 is used as the destination set identifier. The source file identifier "ID4", the source set identifier "IG41" and the "conversion operation 3" that correspond to the destination file identifier "ID5" and the destination set identifier "IG51" are obtained from the conversion relationship shown in Table 8 based on the destination file identifier "ID5" and the destination set identifier "IG51", and the 1^{st} data set corresponding to the source set identifier "IG41" in the data storage file 4 corresponding to the source file identifier "ID4" is obtained based on the source file identifier "ID4" and the source set identifier "IG41".

In some embodiments, the conversion relationship includes the plurality of scripts in the database system. 5031 may be: Obtain a first script from the plurality of scripts based on the file identifier of the first data storage file and the set identifier of the first data set, where a destination file identifier included in the first script is the file identifier of the first data storage file, and a destination set identifier is the set identifier of the first data set, use a source file identifier included in the first script as a file identifier of the second data storage file, use a source file identifier that corresponds to a set identifier of the first data set and that is included in the first script as a set identifier of the second data set, and obtain the second data set in the second data storage file based on the file identifier of the second data storage file and the set identifier of the second data set.

Optionally, a conversion operation is determined based on implementation code that is for the conversion operation and that is included in the first script, where the conversion operation is a first conversion operation for converting the second data storage file into the first data storage file.

For example, refer to FIG. 2. The script 3 is obtained from the script 1, the script 2, and the script 3 based on the file identifier "ID5" of the data storage file 5 and the set identifier "IG51" of the 1^{st} data set. The destination file identifier included in the script 3 is the file identifier "ID5" of the data storage file 5 and the destination set identifier is the set identifier "IG51" of the 1^{st} data set. The 1^{st} data set in the data storage file 4 is obtained based on the source file identifier "ID4" included in the script 3 and the destination set identifier "IG41" corresponding to the set identifier "IG51" of the 1^{st} data set. The conversion operation 3 is determined based on the implementation code 3 that is for implementing the conversion operation 3 and that is included in the script 3, where the first conversion operation is the conversion operation 3.

5032: Identify whether the second data set in the second data storage file includes the dirty data, and if the second data set in the second data storage file does not include the dirty data, perform 5033, or if the second data set in the second data storage file includes the dirty data, perform 5034.

In 5032, whether the second data set in the second data storage file includes the dirty data is identified by using the algorithm for identifying the dirty data. For example, whether the 1^{st} data set in the data storage file 4 includes the dirty data is identified by using the algorithm for identifying the dirty data. Assuming that the 1^{st} data set in the data storage file 4 includes the dirty data, an operation in 5034 is performed.

5033: Determine that the root cause of generating the first dirty data is the first conversion operation, where the first conversion operation is for converting a 2^{nd} data set in the second data storage file into a 1^{st} data set in the first data storage file. The procedure ends.

The second data set in the second data storage file does not have the dirty data, but the first data set in the first data storage file has the first dirty data. The first dirty data may be generated when the second data set in the second data storage file is converted into the first data set in the first data storage file by using the first conversion operation, that is, the first dirty data is generated by the first conversion operation. Therefore, the first conversion operation may be determined as the root cause of generating the first dirty data.

In some embodiments, to improve precision of locating the root cause, the second data set in the second data storage file is converted by using the first conversion operation, to obtain a first target set. If the first target set includes the first dirty data, it is verified that the first dirty data is generated by the first conversion operation, so that it may be determined that the root cause of generating the first dirty data is the first conversion operation.

If the first target set does not include the first dirty data, it is determined that the first dirty data in the first data set in the first data storage file is not generated by the first conversion operation. The first dirty data in the first data set in the first data storage file may be generated due to another reason. For example, the first dirty data in the first data set in the first data storage file may be generated by a misoperation of the skilled person, or the first dirty data in the first data set in the first data storage file may be generated by a hacker attack.

5034: Convert second dirty data in the second data set in the second data storage file by using the first conversion operation, to obtain target data.

In some embodiments, when a similarity condition is satisfied between an encoding rule of the first dirty data and an encoding rule of the second dirty data, the second dirty data in the second data set in the second data storage file is converted by using the first conversion operation, to obtain the target data.

Optionally, in an implementation, a similarity between the encoding rule of the first dirty data and the encoding rule of the second dirty data is calculated. When the similarity exceeds a similarity threshold, it is determined that the similarity condition is satisfied between the encoding rule of the first dirty data and the encoding rule of the second dirty data, and the second dirty data in the second data set in the second data storage file is converted by using the first conversion operation, to obtain the target data.

For example, for the 1^{st} data set in the data storage file 4, the first conversion operation is the conversion operation 3, and the dirty data in the 1^{st} data set in the data storage file 4 is converted by using the conversion operation 3, to obtain a second target data.

5035: Determine whether the target data is the same as the first dirty data, and if the target data is different from the first dirty data, perform 5036, or if the target data is the same as the first dirty data, perform 5037.

For example, for the dirty data in the 1^{st} data set in the data storage file 5, whether the target data obtained through the conversion operation 3 is the same as the dirty data in the 1^{st} data set in the data storage file 5 is determined. Assuming that a result is that it is determined that the target data is the same as the dirty data, 5037 is performed.

5036: Determine that a root cause of the first dirty data in the first data set in which the first data storage file is generated is the first conversion operation. The procedure ends.

If the target data is different from the first dirty data, it indicates that the first dirty data in the first data set in the first data storage file is not generated due to the second dirty data in the second data set in the second data storage file, and the first dirty data in the first data set in the first data storage file may be generated by the first conversion operation. Therefore, it may be determined that the root cause of generating the first dirty data in the first data set in the first data storage file is the first conversion operation.

5037: Obtain a third data set in a third data storage file based on the conversion relationship, the second data storage file, and the second data set, where the plurality of data storage files further include the third data storage file, and the second data set in the second data storage file is obtained by converting the third data set in the third data storage file.

In some embodiments, the first conversion relationship is the correspondence between the source file identifier, the source set identifier, the destination file identifier, and the destination set identifier. 5037 may be: Use the file identifier of the second data storage file as the destination file identifier, use the set identifier of the second data set as the destination set identifier, and obtain, from the conversion relationship based on the destination file identifier and the destination set identifier, the source file identifier corresponding to the destination file identifier and the source set identifier corresponding to the destination set identifier, and obtain, based on the source file identifier and the source set identifier, a data set corresponding to the source data set identifier in a data storage file corresponding to the source file identifier as the third data set in the third data storage file.

The conversion relationship may be the correspondence between the source file identifier, the source set identifier, the destination file identifier, the destination set identifier, and the conversion operation. Optionally, a conversion operation corresponding to the destination file identifier is obtained from the conversion relationship based on the destination file identifier. The conversion operation is a second conversion operation for converting the third data storage file into the second data storage file.

For example, refer to FIG. 2. The file identifier "ID4" of the data storage file 4 is used as the destination file identifier, and the set identifier "IG41" of the 1^{st} data set in the data storage file 4 is used as the destination set identifier. The source file identifiers "ID2 and ID3" corresponding to the destination file identifier "ID4", the source set identifiers "IG21 and IG31" corresponding to the destination set identifier "IG41", and the "conversion operation 2" are obtained from the conversion relationship shown in Table 8 based on the destination file identifier "ID4" and the destination set identifier "IG41", and the 1^{st} data set in the data storage file 2 and the 1^{st} data set in the data storage file 3 are obtained based on the source file identifiers "ID2 and ID3" and the source set identifiers "IG21 and IG31".

In some embodiments, the conversion relationship includes the plurality of scripts in the database system. 5037 may be: Obtain a second script from the plurality of scripts based on the file identifier of the second data storage file and the set identifier of the second data set, where a destination file identifier included in the second script is the file identifier of the second data storage file, and a destination set identifier is the set identifier of the second data set, use a source file identifier included in the second script as a file identifier of the third data storage file, use a source set identifier that corresponds to the set identifier of the second data set and that is in the second script as a set identifier of the third data set, and obtain the third data set in the third data storage file based on the file identifier of the third data storage file and the set identifier of the third data set.

Optionally, a conversion operation is determined based on implementation code that is for the conversion operation and that is included in the second script, where the conversion operation is a second conversion operation for converting the third data storage file into the second data storage file.

For example, refer to FIG. 2. The script 2 is obtained from the script 1, the script 2, and the script 3 based on the file identifier "ID4" of the data storage file 4 and the set identifier "IG41" of the 1^{st} data set. The destination file identifier included in the script 2 is the file identifier "ID4" of the data storage file 4 and the destination set identifier is the set identifier "IG41" of the 1^{st} data set. The 1^{st} data set in the data storage file 2 and the 1^{st} data set in the data storage file 3 are obtained based on the source file identifiers "ID2 and ID3" included in the script 2 and the source set identifiers "IG21 and IG31" corresponding to the set identifier "IG41" of the 1^{st} data set. The conversion operation 2 is determined based on the implementation code 2 that is for implementing the conversion operation 2 and that is included in the script 3, where the second conversion operation is the conversion operation 2.

5038: Identify whether the third data set in the third data storage file includes the dirty data, and if a first data set in the third data storage file does not include the dirty data, determine that the root cause of generating the first dirty data in the first data storage file is the second conversion operation or the second dirty data in the second data set in the second data storage file, where the second conversion operation is for converting the third data storage file into the second data storage file. The procedure ends.

In 5038, whether the third data set in the third data storage file includes the dirty data is identified by using the algorithm for identifying the dirty data. If the third data set in the third data storage file does not include the dirty data, the third data set in the third data storage file is converted by using the second conversion operation, to obtain a second target set. When the second target set includes the second dirty data, it is determined that the root cause of generating the first dirty data is the second conversion operation, or when the second target set does not include the second dirty data, it is determined that the root cause of generating the first dirty data is the second dirty data.

When the second target set includes the second dirty data, it indicates that the second dirty data in the second data set in the second data storage file is generated when the third data set in the third data storage file is converted by using the second conversion operation, to obtain the second data set in the second data storage file, that is, the second dirty data in the second data set in the second data storage file is generated by the second conversion operation, and it is determined that the root cause of generating the first dirty data is the second conversion operation.

When the second target set does not include the second dirty data, it indicates that the second dirty data in the second data set in the second data storage file is not generated when the third data set in the third data storage file is converted by using the second conversion operation, to obtain the second data set in the second data storage file, that is, the second dirty data in the second data set in the second data storage file is not generated by the second conversion operation, and it is determined that the root cause of generating the first dirty data is the second dirty data in the second data set in the second data storage file.

If the third data set in the third data storage file includes the dirty data, the root cause of generating the first dirty data in the first data set in the first data storage file continues to be located. For a specific locating process, refer to the foregoing operations in 5034 to 5038, and details are not described herein again.

For example, whether the 1^{st} data set in the data storage file 2 and the 1^{st} data set in the data storage file 3 include the dirty data is identified by using the algorithm for identifying the dirty data. Assuming that it is identified that neither the 1^{st} data set in the data storage file 2 nor the 1^{st} data set in the data storage file 3 includes the dirty data, the 1^{st} data set in the data storage file 2 and the 1^{st} data set in the data storage file 3 are converted by using the conversion operation 2, to obtain the second target set. If the second target set includes the second dirty data, it is determined that a root cause of generating the dirty data in the 1^{st} data set in the data storage file 5 is the conversion operation 2. The procedure ends.

In some embodiments, the located root cause of generating the first dirty data in the first data storage file may be displayed.

Optionally, a topology view between the first dirty data in the first data storage file and the root cause may be displayed. Alternatively, a topology of a specified quantity of layers is selected from a topology view between the first dirty data in the first data storage file and the root cause, and the topology of the specified quantity of layers is displayed.

Optionally, a conversion operation of each time of conversion in the topology view is further displayed.

For example, a first interface shown in FIG. 6 is displayed, and the first interface includes a topology view between the first dirty data in the data storage file 5 and the conversion operation 2.

In some embodiments, if the skilled person finds that a displayed root cause is incorrect, the skilled person may modify the displayed root cause.

In some embodiments, the skilled person may repair the root cause. For example, if the root cause is a conversion operation, a script for implementing the conversion operation is repaired; or if the root cause is dirty data in a data storage file, the dirty data in the data storage file is repaired.

After the root cause is repaired, the data storage file in the database system is re-converted, so that the dirty data in the data storage file in the database system can be repaired.

For example, refer to FIG. 2. The root cause of generating the dirty data in the 1^{st} data set in the data storage file 5 is the conversion operation 2, and the skilled person repairs the script 2 for implementing the conversion operation 2. Then, the data storage file 2 and the data storage file 3 are converted by using a repaired script 2, to obtain the data storage file 4, and the data storage file 4 is converted by using the script 3, to obtain the data storage file 5, so that the dirty data in the data storage file 4 and the data storage file 5 in the database system can be repaired.

In this embodiment of this application, the conversion relationship is obtained. The conversion relationship includes the correspondence between the source file identifier, the source set identifier, the destination file identifier, and the destination set identifier. When the first dirty data in the first data set in the first data storage file is obtained, the second data set in the second data storage file is obtained based on the file identifier of the first data storage file, the set identifier of the first data set, and the conversion relationship, where the first data set in the first data storage file is obtained by converting the second data set in the second data storage file. When the second data set in the second data storage file does not include the dirty data, it is determined that the root cause of generating the first dirty data is the first conversion operation, where the first conversion operation is for converting the second data storage file into the first data storage file. When the second data set in the second data storage file includes the dirty data, the second dirty data is converted by using the first conversion operation, to obtain the second target data, where the second dirty data is the dirty data included in the second data set in the second data storage file; and when the second target data is different from the first dirty data, it is determined that the root cause of generating the first dirty data is the first conversion operation. When the second target data is the same as the first dirty data, the third data set in the third data storage file is obtained based on the conversion relationship, the second data storage file, and the second data set, where the second data set in the second data storage file is obtained by converting the third data set in the third data storage file; and when the third data set in the third data storage file does not include the dirty data, it is determined that the root cause of generating the first dirty data is the second conversion operation or the second dirty data, where the second conversion operation is for converting the third data set in the third data storage file into the second data set in the second data storage file. In this way, the root cause of generating the first dirty data in the first data set in the first data storage file can be automatically located by using the conversion relationship, to improve efficiency of locating the root cause.

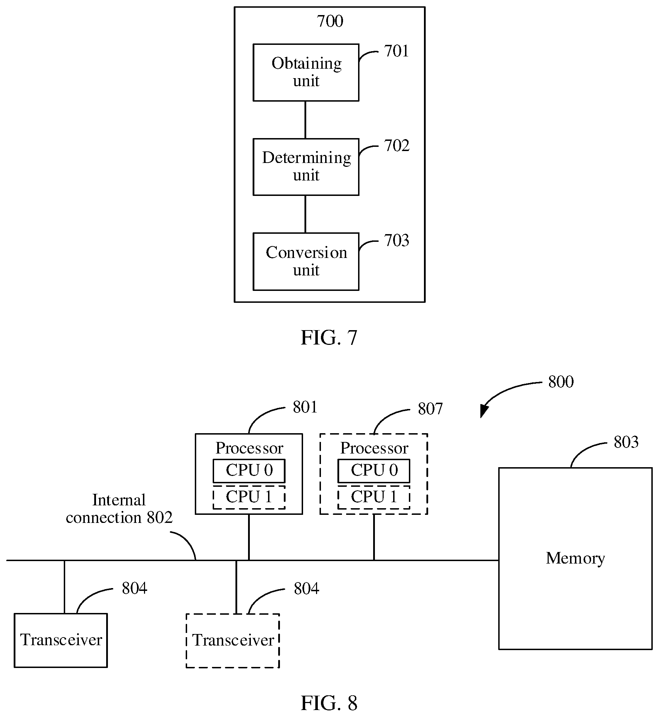

Refer to FIG. 7. An embodiment of this application provides a root cause locating apparatus 700. The apparatus 700 is deployed in a database system in a cloud computing service, a management device communicating with the database system, or the like. For example, the apparatus 700 is deployed on an execution body of the method 300 shown in FIG. 3 or the method 500 shown in FIG. 5. The execution body is the database system or the management device communicating with the database system, and includes:
an obtaining unit 701, configured to obtain a first conversion relationship between a plurality of data storage files and a first data storage file, where the first data storage file includes first dirty data, and the plurality of data storage files include the first data storage file; and
a determining unit 702, configured to determine, based on the first conversion relationship and the first data storage file, a root cause of generating the first dirty data.

Optionally, for a detailed implementation process in which the obtaining unit 701 obtains the first conversion relationship and the first data storage file, refer to related content in steps 301 and 302 of the method 300 shown in FIG. 3 and steps 501 and 502 of the method 500 shown in FIG. 5. Details are not described herein again.

Optionally, for a detailed implementation process in which the determining unit 702 determines the root cause of generating the first dirty data, refer to related content in step 303 of the method 300 shown in FIG. 3 and step 505 of the method 500 shown in FIG. 5. Details are not described herein again.

Optionally, the obtaining unit 701 is further configured to:
obtain a second conversion relationship between a plurality of data sets and a first data set, where the plurality of data sets are data sets in the plurality of data storage files, and the first data set is a set that is in the first data storage file and that includes the first dirty data.

The determining unit 702 is configured to:
obtain a second data set in a second data storage file based on the first conversion relationship, the second conversion relationship, the first data storage file, and the first data set, where the plurality of data storage files further include the second data storage file, the first data storage file is obtained by converting the second data storage file, and the first data set is obtained by converting the second data set; and
when the second data set does not include dirty data, determine that the root cause of generating the first dirty data is a first conversion operation.

Optionally, for a detailed implementation process in which the obtaining unit 701 obtains the second conversion relationship between the plurality of data sets and the first data set, refer to related content in steps 501 and 502 of the method 500 shown in FIG. 5. Details are not described herein again.

Optionally, for a detailed implementation process in which the determining unit 702 obtains the second data set in the second data storage file, refer to related content in step 5031 of the method 500 shown in FIG. 5. Details are not described herein again.

Optionally, for a detailed implementation process in which the determining unit 702 determines that the root cause of generating the first dirty data is the first conversion operation, refer to related content in steps 5032 to 5036 of the method 500 shown in FIG. 5. Details are not described herein again.

Optionally, the determining unit 702 is configured to:
obtain a second data storage file based on the first conversion relationship and the first data storage file, where the plurality of data storage files further include the second data storage file, and the first data storage file is obtained by converting the second data storage file; and
when the second data storage file does not include dirty data, determine that the root cause of generating the first dirty data is a first conversion operation, where the first conversion operation is for converting the second data storage file into the first data storage file.

Optionally, for a detailed implementation process in which the determining unit 702 obtains the second data storage file based on the first conversion relationship and the first data storage file, refer to related content in step 3031 of the method 300 shown in FIG. 3. Details are not described herein again.

Optionally, the first conversion relationship includes a file identifier of the first data storage file and a file identifier of the second data storage file.

The determining unit 702 is configured to:
obtain the file identifier of the second data storage file based on the first conversion relationship and the file identifier of the first data storage file; and
obtain the second data storage file based on the file identifier of the second data storage file.

Optionally, for a detailed implementation process in which the determining unit 702 obtains the file identifier of the second data storage file based on the first conversion relationship and the file identifier of the first data storage file, refer to related content in step 3031 of the method 300 shown in FIG. 3. Details are not described herein again.

Optionally, the obtaining unit 701 is configured to:
obtain a first script, where the first script is for implementing the first conversion operation, and the first script includes the file identifier of the first data storage file and the file identifier of the second data storage file; and
generate the first conversion relationship that includes the file identifier of the first data storage file and the file identifier of the second data storage file in the first script.

Optionally, for a detailed implementation process in which the obtaining unit 701 obtains the first script, refer to related content in step 3011 of the method 300 shown in FIG. 3. Details are not described herein again.

Optionally, for a detailed implementation process in which the obtaining unit 701 generates the first conversion relationship, refer to related content in step 3012 of the method 300 shown in FIG. 3. Details are not described herein again.

Optionally, the determining unit 702 is further configured to:
when the second data storage file includes dirty data, convert second dirty data by using the first conversion operation, to obtain target data, where the second dirty data is the dirty data included in the second data storage file; and
when the target data is different from the first dirty data, determine that the root cause of generating the first dirty data is the first conversion operation.

Optionally, for a detailed implementation process in which the determining unit 702 converts the second dirty data by using the first conversion operation to obtain the target data, refer to related content in step 3034 of the method 300 shown in FIG. 3. Details are not described herein again.

Optionally, for a detailed implementation process in which the determining unit 702 determines that the root cause of generating the first dirty data is the first conversion operation, refer to related content in steps 3035 and 3036 of the method 300 shown in FIG. 3. Details are not described herein again.

Optionally, the determining unit 702 is further configured to:
when the target data is the same as the first dirty data, obtain a third data storage file based on the first conversion relationship and the second data storage file, where the plurality of data storage files further include the third data storage file, and the second data storage file is obtained by converting the third data storage file; and
when the third data storage file does not include dirty data, determine that the root cause of generating the first dirty data is the second conversion operation or the second dirty data, where the second conversion operation is for converting the third data storage file into the second data storage file.

Optionally, for a detailed implementation process in which the determining unit 702 obtains third data storage file based on the first conversion relationship and the second data storage file, refer to related content in step 3037 of the method 300 shown in FIG. 3. Details are not described herein again.

Optionally, for a detailed implementation process in which the determining unit 702 determines that the root cause of generating the first dirty data is the second conversion operation or the second dirty data, refer to related content in step 3038 of the method 300 shown in FIG. 3. Details are not described herein again.

Optionally, the apparatus 700 further includes a conversion unit 703.

The conversion unit 703 is configured to convert the third data storage file by using the second conversion operation, to obtain a target file.

The determining unit 702 is configured to:
when the target file includes the second dirty data, determine that the root cause of generating the first dirty data is the second conversion operation; or
when the target file does not include the second dirty data, determine that the root cause of generating the first dirty data is the second dirty data.

Optionally, the conversion unit 703 is configured to: when a similarity condition is satisfied between an encoding rule of the first dirty data and an encoding rule of the second dirty data, convert the second dirty data by using the first conversion operation, to obtain the target data.

Optionally, a format of the first data storage file is a structured data storage file or a semi-structured data storage file.

In this embodiment of this application, the obtaining unit obtains the first conversion relationship between the plurality of data storage files and the first data storage file, where the first data storage file includes the first dirty data, and the plurality of data storage files include the first data storage file. The determining unit determines, based on the first conversion relationship and the first data storage file, the root cause of generating the first dirty data. Because the obtaining unit obtains the first conversion relationship between the plurality of data storage files, the determining unit determines, based on the first conversion relationship and the first data storage file, the root cause of generating the first dirty data. In this way, the root cause of generating the first dirty data can be automatically located, to improve efficiency of locating the root cause.

FIG. 8 is a diagram of a device 800 according to an embodiment of this application. The device 800 may be the database system of the cloud computing service or the management device communicating with the database system in any one of the foregoing embodiments. For example, the device 800 may be an execution body of the method 300 shown in FIG. 3 or the method 500 shown in FIG. 5. The execution body is the database system or the management device communicating with the database system. The device 800 includes at least one processor 801, an internal connection 802, a memory 803, and at least one transceiver 804.

The device 800 is an apparatus of a hardware structure.

In some embodiments, the device 800 may be configured to implement functional modules in the apparatus 700 in FIG. 7. For example, a person skilled in the art may figure out that the obtaining unit 701, the determining unit 702, and the conversion unit 703 in the apparatus 700 shown in FIG. 7 may be implemented by the at least one processor 801 by invoking code in the memory 803.

Optionally, the processor 801 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions in this application.

The internal connection 802 may include a path in which information is transmitted between the foregoing components. Optionally, the internal connection 802 is a board, a bus, or the like.

The transceiver 804 is configured to communicate with another device or a communication network.

The memory 803 may be, but is not limited to, a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a blue-ray disc, or the like), a magnetic disk storage medium or another magnetic storage device, or any other medium that can be for carrying or storing expected program code in an instruction or data structure form and that can be accessed by a computer. The memory may exist independently, and is connected to the processor through the bus. The memory may alternatively be integrated with the processor.

The memory 803 is configured to store application program code for executing solutions of this application, and the processor 801 controls execution. The processor 801 is configured to execute the application program code stored in the memory 803, and cooperate with the at least one transceiver 804, to enable the device 800 to implement a function in the method in this patent.

In a specific implementation, in an embodiment, the processor 801 may include one or more CPUs, for example, a CPU 0 and a CPU 1 shown in FIG. 8.

In a specific implementation, in an embodiment, the device 800 may include a plurality of processors, for example, the processor 801 and a processor 807 shown in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are only optional embodiments of this application, but are not intended to limit this application. Any modification, equivalent replacement, or improvement made within the principle of this application should fall within the protection scope of this application.

## Claims

1. A root cause locating method, wherein the method comprises:
obtaining, by a first device, a first conversion relationship between a plurality of data storage files and a first data storage file, wherein the first data storage file comprises first dirty data, the plurality of data storage files comprise the first data storage file, and the first device is a database system in a cloud computing service or a management device communicating with the database system; and
determining, by the first device based on the first conversion relationship and the first data storage file, a root cause of generating the first dirty data.

2. The method according to claim 1, wherein the method further comprises:
obtaining, by the first device, a second conversion relationship between a plurality of data sets and a first data set, wherein the plurality of data sets are data sets in the plurality of data storage files, and the first data set is a set that is in the first data storage file and that comprises the first dirty data; and
the determining, by the first device based on the first conversion relationship and the first data storage file, a root cause of generating the first dirty data comprises:
obtaining, by the first device, a second data set in a second data storage file based on the first conversion relationship, the second conversion relationship, the first data storage file, and the first data set, wherein the plurality of data storage files further comprise the second data storage file, the first data storage file is obtained by converting the second data storage file, and the first data set is obtained by converting the second data set; and
when the second data set does not comprise dirty data, determining, by the first device, that the root cause of generating the first dirty data is the first conversion operation.

3. The method according to claim 1, the determining, by the first device based on the first conversion relationship and the first data storage file, a root cause of generating the first dirty data comprises:
obtaining, by the first device, a second data storage file based on the first conversion relationship and the first data storage file, wherein the plurality of data storage files further comprise the second data storage file, and the first data storage file is obtained by converting the second data storage file; and
when the second data storage file does not comprise dirty data, determining, by the first device, that the root cause of generating the first dirty data is a first conversion operation, wherein the first conversion operation is for converting the second data storage file into the first data storage file.

4. The method according to claim 3, wherein the first conversion relationship comprises a file identifier of the first data storage file and a file identifier of the second data storage file, and
the obtaining, by the first device, a second data storage file based on the first conversion relationship and the first data storage file comprises:
obtaining, by the first device, the file identifier of the second data storage file based on the first conversion relationship and the file identifier of the first data storage file; and
obtaining, by the first device, the second data storage file based on the file identifier of the second data storage file.

5. The method according to claim 4, wherein the obtaining, by a first device, a first conversion relationship comprises:
obtaining, by the first device, a first script, wherein the first script is for implementing the first conversion operation, and the first script comprises the file identifier of the first data storage file and the file identifier of the second data storage file; and
generating, by the first device, the first conversion relationship that comprises the file identifier of the first data storage file and the file identifier of the second data storage file in the first script.

6. The method according to any one of claims 3 to 5, wherein the determining, by the first device based on the first conversion relationship and the first data storage file, a root cause of generating the first dirty data further comprises:
when the second data storage file comprises dirty data, converting, by the first device, second dirty data by using the first conversion operation, to obtain target data, wherein the second dirty data is the dirty data comprised in the second data storage file; and
when the target data is different from the first dirty data, determining, by the first device, that the root cause of generating the first dirty data is the first conversion operation.

7. The method according to claim 6, wherein the determining, by the first device based on the first conversion relationship and the first data storage file, a root cause of generating the first dirty data further comprises:
when the target data is the same as the first dirty data, obtaining, by the first device, a third data storage file based on the first conversion relationship and the second data storage file, wherein the plurality of data storage files further comprise the third data storage file, and the second data storage file is obtained by converting the third data storage file; and
when the third data storage file does not comprise dirty data, determining, by the first device, that the root cause of generating the first dirty data is a second conversion operation or the second dirty data, wherein the second conversion operation is for converting the third data storage file into the second data storage file.

8. The method according to claim 7, wherein the method further comprises:
converting, by the first device, the third data storage file by using the second conversion operation, to obtain a target file; and
the determining, by the first device, that the root cause of generating the first dirty data is a second conversion operation or the second dirty data comprises:
when the target file comprises the second dirty data, determining, by the first device, that the root cause of generating the first dirty data is the second conversion operation; or
when the target file does not comprise the second dirty data, determining, by the first device, that the root cause of generating the first dirty data is the second dirty data.

9. The method according to any one of claims 6 to 8, wherein the converting, by the first device, second dirty data by using the first conversion operation, to obtain target data comprises:
when a similarity condition is satisfied between an encoding rule of the first dirty data and an encoding rule of the second dirty data, converting, by the first device, the second dirty data by using the first conversion operation, to obtain the target data.

10. The method according to any one of claims 1 to 9, wherein a format of the first data storage file is a structured data storage file or a semi-structured data storage file.

11. A root cause locating apparatus, wherein the apparatus is deployed on a database system in a cloud computing service or a management device communicating with the database system, and comprises:
an obtaining unit, configured to obtain a first conversion relationship between a plurality of data storage files and a first data storage file, wherein the first data storage file comprises first dirty data, and the plurality of data storage files comprise the first data storage file; and
a determining unit, configured to determine, based on the first conversion relationship and the first data storage file, a root cause of generating the first dirty data.

12. The apparatus according to claim 11, wherein the obtaining unit is further configured to:
obtain a second conversion relationship between a plurality of data sets and a first data set, wherein the plurality of data sets are data sets in the plurality of data storage files, and the first data set is a set that is in the first data storage file and that comprises the first dirty data; and
the determining unit is configured to:
obtain a second data set in a second data storage file based on the first conversion relationship, the second conversion relationship, the first data storage file, and the first data set, wherein the plurality of data storage files further comprise the second data storage file, the first data storage file is obtained by converting the second data storage file, and the first data set is obtained by converting the second data set; and
when the second data set does not comprise dirty data, determine that the root cause of generating the first dirty data is the first conversion operation.

13. The apparatus according to claim 11, wherein the determining unit is configured to:
obtain a second data storage file based on the first conversion relationship and the first data storage file, wherein the plurality of data storage files further comprise the second data storage file, and the first data storage file is obtained by converting the second data storage file; and
when the second data storage file does not comprise dirty data, determine that the root cause of generating the first dirty data is a first conversion operation, wherein the first conversion operation is for converting the second data storage file into the first data storage file.

14. The apparatus according to claim 13, wherein the first conversion relationship comprises a file identifier of the first data storage file and a file identifier of the second data storage file, and
the determining unit is configured to:
obtain the file identifier of the second data storage file based on the first conversion relationship and the file identifier of the first data storage file; and
obtain the second data storage file based on the file identifier of the second data storage file.

15. The apparatus according to claim 14, wherein the obtaining unit is configured to:
obtain a first script, wherein the first script is for implementing the first conversion operation, and the first script comprises the file identifier of the first data storage file and the file identifier of the second data storage file; and
generate the first conversion relationship that comprises the file identifier of the first data storage file and the file identifier of the second data storage file in the first script.

16. The apparatus according to any one of claims 13 to 15, wherein the determining unit is further configured to:
when the second data storage file comprises dirty data, convert second dirty data by using the first conversion operation, to obtain target data, wherein the second dirty data is the dirty data comprised in the second data storage file; and
when the target data is different from the first dirty data, determine that the root cause of generating the first dirty data is the first conversion operation.

17. The apparatus according to claim 16, wherein the determining unit is further configured to:
when the target data is the same as the first dirty data, obtain a third data storage file based on the first conversion relationship and the second data storage file, wherein the plurality of data storage files further comprise the third data storage file, and the second data storage file is obtained by converting the third data storage file; and
when the third data storage file does not comprise dirty data, determine that the root cause of generating the first dirty data is a second conversion operation or the second dirty data, wherein the second conversion operation is for converting the third data storage file into the second data storage file.

18. The apparatus according to claim 17, wherein the apparatus further comprises a conversion unit, wherein
the conversion unit is configured to convert the third data storage file by using the second conversion operation, to obtain a target file; and
the determining unit is configured to:
when the target file comprises the second dirty data, determine that the root cause of generating the first dirty data is the second conversion operation; or
when the target file does not comprise the second dirty data, determine that the root cause of generating the first dirty data is the second dirty data.

19. The apparatus according to any one of claims 16 to 18, wherein
the conversion unit is configured to: when a similarity condition is satisfied between an encoding rule of the first dirty data and an encoding rule of the second dirty data, convert the second dirty data by using the first conversion operation, to obtain the target data.

20. The apparatus according to any one of claims 11 to 19, wherein a format of the first data storage file is a structured data storage file or a semi-structured data storage file.

21. A root cause locating device, comprising at least one processor, wherein the at least one processor is configured to: be coupled to a memory, and read and execute instructions in the memory, to implement the method according to any one of claims 1 to 10.

22. A computer storage medium, storing a computer program, wherein when the computer program is executed by a processor, the method according to any one of claims 1 to 10 is implemented.

23. A computer program product, comprising a computer program, wherein when the computer program is executed by a processor, the method according to any one of claims 1 to 10 is implemented.
